# EUROPÄISCHE PATENTSCHRIFT

(11) **EP 0 587 021 B1**
(45) Veröffentlichungstag und Bekanntmachung des Hinweises auf die Patenterteilung: **16.08.1995**
(21) Anmeldenummer: 93113900.0
(22) Anmeldetag: 31.08.1993
(51) Int. Cl.: C09D 11/02, C09B 67/00

(54) **Verwendung von Azopigmentpräparationen für den Iösungmittelhaltigen Verpackungstief-und Flexodruck**
Use of preparations of azo-pigments containing solvents for intaglio printing and flexographic printing on packaging
Préparations de pigments azoiques contenant des solvants pour hélio- et flexographie d'emballage

(30) Priorität: 02.09.1992 DE 4229206
(43) Veröffentlichungstag der Anmeldung: 16.03.1994
(73) Patentinhaber: HOECHST AKTIENGESELLSCHAFT, 65929 Frankfurt am Main (DE)
(72) Erfinder: Weide, Joachim, D-65779 Kelkheim (Taunus) (DE); Metz, Hans Joachim Dr., D-64285 Darmstadt (DE); Jung, Rüdiger Dr., D-65779 Kelkheim (Taunus) (DE); Winter, Rainer, D-61440 Oberursel (DE)

(56) Entgegenhaltungen:
- EP-A- 0 017 189
- EP-A- 0 180 870
- DE-A- 2 001 505
- DE-A- 3 026 127
- WORLD SURFACE COATINGS ABSTRACTS, Bd. 52, Nr. 444 , Juni 1979; "Printing ink for transfer self adhering reproductions"; & SU-A-583 149

## Beschreibung

Die vorliegende Erfindung liegt auf dem Gebiet der Azopigmentpräparationen. Aus EP-A-138104, EP-A-57880 (US-PS 4 515 639), EP-A-76024 (US-PS 4 461 647) ist bekannt, daß man Pigmentoberflächen zur Optimierung anwendungstechnischer Eigenschaften, wie Farbstärke, Glanz, Transparenz und Rheologie, speziell für das vorgesehene Einsatzgebiet mit verschiedenen Hilfsmitteln, wie Harzen, langkettigen aliphatischen Aminen oder Synergisten belegt. Üblicherweise werden die Pigmentpräparationen aus wäßrigen Medien isoliert. Um Pigmente oder Pigmentpräparationen mit den in der Praxis üblichen Dispergieraggregaten wie Perlmühlen und Dreiwalzenstuhl in Druckfarben einzuarbeiten, müssen die Pigmente oder -präparationen nach der Trocknung in geeigneten Mahlaggregaten wie Luftstrahlmühlen, Stift- oder Pralltellermühlen pulverisiert werden.

In der Praxis zeigte sich, daß besonders Pigmentpräparationen mit hohem Harzanteil, die in lösungsmittelhaltigen Verpackungstief- und Flexodruckfarben eingearbeitet werden, sehr mahlempfindlich sind und daß bei einer Mahlung ihre durch die Präparation erzielten coloristischen Vorteile größtenteils wieder verloren gehen. Pigmentpulver mit einem tolerierbaren Siebrückstand von weniger als 1 % bei einer Naßsiebung über ein 64 »m-Sieb führen nach der Einarbeitung in Nitrocellulose-Tiefdruckfarben zu farbschwachen, deckenden und matten Drucken. Erst Mahlungen mit einem Siebrückstand von mehr als 20 % ergeben coloristisch einwandfreie Drucke mit hohem Glanz oder hoher Transparenz. Siebrückstände dieser Größenordnung sind jedoch produktionstechnisch schwer reproduzierbar und führen bei den Druckfarbenherstellern zu erheblichen Dispergierproblemen.

Der vorliegenden Erfindung lag die Aufgabe zugrunde, die Mahlempfindlichkeit von Mono- und Disazopigmentpräparationen soweit zu verringern, daß nach der Einarbeitung in lösungsmittelhaltige Verpackungstief- und Flexodruckfarben die vorstehend beschriebenen Nachteile vermieden werden.

Es wurde gefunden, daß man durch eine zusätzliche Oberflächenbelegung der präparierten Azopigmente mit nichtionogenen Tensiden, die einen Trübungspunkt in Wasser aufweisen, überraschenderweise die Mahlempfindlichkeit der getrockneten Azopigmentpräparationen soweit verringern kann, daß die durch die Präparierung erzielten hervorragenden coloristischen Eigenschaften in lösungsmittelhaltigen Verpackungstief- und Flexodruckfarben auch nach einer Mahlung, beispielsweise über eine technische Jet-Mühle oder Stiftmühle, erhalten bleiben.

Gegenstand der vorliegenden Erfindung ist die Verwendung von Mono- oder Disazopigmenten oder einer Präparation der genannten Pigmente aus der Gruppe der Acetessigarylid-Pigmente, Pyrazolon-Pigmente, β-Naphthol-Pigmente, 2-Hydroxy-3-naphthoesäureanilid-Pigmente, 2-Hydroxynaphthoesäure-Pigmente, Benzimidazolon-Pigmente, Diarylgelb-Pigmente, Diarylpyrazolon-Pigmente und Disazobenzimidazolon-Pigmente, mit Ausnahme der Pigmente, die Bis(acetoacetylamino)benzol oder dessen Derivate als Kupplungskomponente haben, wobei die Pigmente oder Pigmentpräparationen hergestellt worden sind, indem man spätestens unmittelbar vor der Isolierung des Mono- oder Disazopigments mindestens ein nichtionisches Tensid, das in wäßriger Lösung einen Trübungspunkt hat, zusetzt, zum Pigmentieren von lösungsmittelhaltigen Verpackungstief- und Flexodruckfarben wobei wässrige Systeme ausgenommen sind.

Die Pigmente der vorstehend genannten Gruppen sind beispielsweise in W. Herbst, K. Hunger, Industrielle Organische Pigmente, VCH-Verlag, 1987 beschrieben.

Unter Pigmentpräparation wird in diesem Zusammenhang verstanden, daß noch weitere Hilfsmittel, wie anionenaktive oder kationenaktive oberflächenaktive Substanzen oder natürliche oder synthetische Harze oder Harzderivate dem Pigment zugegeben worden sind. Weiterhin kann es günstig sein, bei der Herstellung der Disazopigmente gebräuchliche Additive zuzusetzen, beispielsweise solche, die die rheologischen Eigenschaften der aus den Pigmenten hergestellten Druckfarben günstig beeinflussen.

Die erfindungsgemäße Verwendung kann auch mit einem Gemisch mehrerer der besagten Pigmente durchgeführt werden.

Die für den erfindungsgemäßen Zweck in Betracht kommenden Pigmente sind aus den nachstehend genannten Diazokomponenten und Kupplungskomponenten zusammengesetzt.

Als Diazokomponenten kommen diazotierbare aromatische Amine in Betracht, insbesondere Aniline und Benzidine, die unsubstituiert oder ein- oder mehrfach substituiert sind. Beispiele für aromatische Amine, die für die Herstellung der erfindungsgemäß verwendeten Azopigmente von Interesse sind, sind Anilin und Benzidin sowie substituierte Aniline und Benzidine, vorzugsweise Anilin oder Benzidin mit 1 bis 3 Substituenten aus der Gruppe C₁-C₄-Alkyl, insbesondere Methyl oder Ethyl; C₁-C₄- Alkoxy, insbesondere Methoxy oder Ethoxy; Phenoxy, Halogenphenoxy; Carboxy; Carbalkoxy wie Carbomethoxy, Carboethoxy, Carbopropoxy, Carboisopropoxy oder Carbobutoxy; Acyl, insbesondere Acetyl oder Benzoyl; Acyloxy, insbesondere Acetoxy; Acylamino, insbesondere Acetylamino oder Benzoylamino; unsubstituiertes oder N-mono- oder N,N-disubstituiertes Carbamoyl oder unsubstituiertes oder N-mono- oder N,N-disubstituiertes Sulfamoyl, wobei als Substituenten C₁-C₄-Alkyl oder ein- bis dreifach substituiertes Phenyl oder ein unsubstituierter oder substituierter aromatischer Heterocyclus in Betracht kommen; C₁-C₄-Alkylamino oder Phenylamino; C₁-C₄-Alkylsulfonyl oder Phenylsulfonyl; Phenylsulfonylamino; Sulfo; Cyano; Halogen, insbesondere Chlor oder Brom; Nitro und Trifluormethyl.

Beispiele für substituierte Aniline und Benzidine sind in diesem Zusammenhang Aminoterephthalsäuredimethylester, Aminoisophthalsäuredimethylester, Anthranilsäure, 2-Trifluormethyl-anilin, 2,5-Dichlor-anilin, 2,4-Dichloranilin, 2,4,5-Trichloranilin, 2-Methyl-4-chlor-anilin, 2-Chlor-5-trifluormethyl-anilin, 2-Chlor-4-nitro-anilin, 2-Nitro-anilin, 4-Nitro-anilin, 2-Methyl-5-nitro-anilin, 2-Methyl-4-nitro-anilin, 2,2',5,5'-Tetrachlorbenzidin, 3,3'-Dichlorbenzidin, 3,3'-Dimethoxybenzidin, 2,5-Dimethoxy-4-aminophenyl-sulfanilid, 2-Sulfo-4-chlor-5-methyl-anilin, 2-Nitro-4-chlor-anilin, 2-Nitro-4-methyl-anilin, 2,4-Dinitro-anilin, 3-Amino-4-chlor-benzamid, 3-Amino-4'-carbomethoxy-benzoyl-2,5-dichloranilin, 4-Amino-benzamid, 2-Amino-benzoesäurebutylester, 3'-Amino-4'-anisoyl-4-aminobenzamid, 2-Amino-benzoesäuremethylester, 2-Methyl-5-methoxy-4-amino-phenylsulfmethylamid, 2,5-Dimethoxy-4-aminophenyl-sulfmethylamid, 2-Methoxy-4-nitro-anilin, 2-Methoxy-5-diethylsulfamido-anilin, 2-Sulfosäure-4-chlor-5-carboxy-anilin, 3-Carbanilido-(4'-sulfosäure)-anilin, 2-Sulfosäure-anilin und 2-Methoxy-5-carbanilido-anilin.

Beispiele für Kupplungskomponenten der erfindungsgemäß verwendeten Azopigmente sind: β-Naphthol, 1-Acetoacetylamino-2-methyl-benzol, 1-Acetoacetylamino-2-chlorbenzol, 5-Acetoacetylamino-benzimidazolon, 5-(2'-Hydroxy-3'-naphthoyl)-aminobenzimidazolon, 1-Acetoacetylamino-2-methyl-5-chlor-benzol, 1-Acetoacetylamino-2,4-dichlorbenzol, 1-(2'-Hydroxy-3'-naphthoylamino)-4-acetylamino-benzol, 1-(2'-Hydroxy-3'-naphthoylamino)-2-methoxy-benzol, 1-(2'-Hydroxy-3'-naphthoylamino)-2-ethoxy-benzol, 1-(2'-Hydroxy-3'-naphthoylamino)-2,4-dimethoxy-5-chlorbenzol, 3,3'-Dimethyl-diacetoacetyl-benzidin, 1-Acetoacetylamino-2-methoxy-benzol, Acetoacetylamino-benzol, 1-Acetoacetylamino-2,4-dimethylbenzol, 1-Acetoacetylamino-2,5-dimethoxy-4-chlor-benzol, 1-Acetoacetylamino-2,4-dimethoxy-5-chlor-benzol, 1-Phenyl-pyrazolon-5, 1-Phenyl-3-carboethoxy-pyrazolon-5, 1-(4'-methyl)-phenyl-3-methylpyrazolon-5, 1-Phenyl-3-methyl-pyrazolin-5, 1-(2'-Hydroxy-3'-naphthoylamino)-4-methyl-benzol, 1-(2'-Hydroxy-3'-naphthoylamino)-benzol, 1 - (2'-Hydroxy-3'-naphthoylamino)-2-methyl-benzol, 1-(2'-Hydroxy-3'-naphthoylamino)-2-methyl-4-chlor-benzol, 1-(2-Hydroxy-3'-naphthoylamino)-4-chlor-benzol, 1-(2'-Hydroxy-3'-naphthoylamino)-2-methyl-5-chlor-benzol, 1-(2'-Hydroxy-3'-naphthoyl-amino)-2,5-dimethoxy-4-chlor-benzol und 2-Hydroxy-3-naphthoesäureanilid.

Besonders bevorzugte Kupplungskomponenten sind:
β-Naphthol, 1-Acetoacetylamino-2-methyl-benzol, 1-Acetoacetylamino-2-chlorbenzol, 5-Acetoacetylamino-benzimidazolon, 5-(2'-Hydroxy-3'-naphthoyl)-aminobenzimidazolon, 1-(2'-Hydroxy-3'-naphthoylamino)-2-methoxy-benzol, 1-(2'-Hydroxy-3'-naphthoylamino)-2-ethoxy-benzol, 1-Acetoacetylamino-2-methoxy-benzol, Acetoacetylamino-benzol, 1-Acetoacetylamino-2,4-dimethylbenzol, 1-Acetoacetylamino-2,5-dimethoxy-4-chlor-benzol, 1-Acetoacetylamino-2,4-dimethoxy-5-chlor-benzol, 1-(4'-Methyl)-phenyl-3-methylpyrazolon oder 1-Phenyl-3-methyl-pyrazolon-5.

Das verwendete nichtionische Tensid, die erforderliche Tensidmenge und der Zeitpunkt der Zugabe sind von der chemischen Konstitution, der spezifischen Oberfläche des jeweiligen Pigments, den speziellen Verfahrensbedingungen und den Anforderungen an die Pigmentpräparation abhängig.

Ein geeignetes nichtionogenes Tensid muß in wäßriger Lösung einen Trübungspunkt aufweisen. Der Trübungspunkt der besagten Tenside in Wasser liegt bevorzugt zwischen 5 und 90°C, insbesondere zwischen 20 und 70°C. Die Trübungspunkte werden nach DIN 53917 bestimmt. Die Menge des einzusetzenden Tensides liegt zwischen 1 und 20 Gewichtsteilen, vorzugsweise 3 und 15 Gewichtsteilen, bezogen auf 100 Gewichtsteile Pigment, Pigmentgemisch oder Pigmentpräparation.

Für das Verfahren ist eine Vielzahl nichtionischer Tenside mit unterschiedlichen Strukturen geeignet, sofern sie einen Trübungspunkt in Wasser aufweisen. Tenside, die diese Anforderungen erfüllen, sind beispielsweise in EP-A-180 870 (US-PS 4 828 622) beschrieben. Als besonders geeignet haben sich nichtionogene Oxalkylate von Alkoholen, Fettalkoholen, Phenolen, Alkylphenolen, Naphtholen und Alkylnaphtholen mit Ethylenoxid und/oder Blockpolymere von Ethylenoxid und Propylenoxid erwiesen. Die Temperatur des Trübungspunktes derartiger Verbindungen hängt von der Länge der Polyalkylenoxid-Kette ab und kann bei der Synthese der Tenside durch die Menge des eingesetzten Ethylenoxids und/oder Propylenoxids variiert werden.

Von besonderem Interesse sind Verbindungen mit einer Poly(ethylenoxy)-Kette oder einer Poly(ethylenoxy)-poly-(methylethylenoxy)-Kette, die über ein Sauerstoff- oder ein Stickstoffatom mit Resten der folgenden Art verbunden sind:
aliphatische oder cycloaliphatische, primäre oder sekundäre, gesättigte oder ungesättigte Alkylreste mit 6 bis 26 C-Atomen, insbesondere bevorzugt Alkylreste mit 10 bis 18 C-Atomen Kettenlänge, beispielsweise Nonyl-, Decyl-, Undecyl-, Dodecyl-, Tridecyl-, Tetradecyl-, Pentadecyl-, Hexadecyl-, Heptadecyl-, Octadecyl-, 2-Butyloctyl-, 2-Phenyloctyl-, 2-Hexyldecyl-, 2-Heptylundecyl-, 2-Octyldodecyl-, 2-Nonyltridecyl-, 2-Decyltetradecyl-, 10-Undecenyl-, Oleyl-, 9-Octadecenyl-, Linoleyl- oder Linolenylreste;
aromatische Reste wie der gegebenenfalls substituierte Phenyl- oder der Alkylphenylrest mit bis zu drei primären oder sekundären C₄-C₁₂-Alkylresten, vorzugsweise den Hexylphenyl-, Heptylphenyl-, Octylphenyl-, Nonylphenyl-, Undecylphenyl-, Dodecylphenyl-, Isononylphenyl-, Tributylphenyl- oder Dinonylphenylrest und der Phenylrest, der mit weiteren aromatischen Resten substituiert ist, wie der Benzyl-p-phenyl-phenylrest;
Naphthyl- oder C₁-C₄-Alkylnaphthylreste, vorzugsweise der α-Naphthyl- oder β-Naphthylrest oder der Alkyl-β-naphthylrest mit 1 bis 3 unverzweigten oder verzweigten C₁-C₁₆-Alkylgruppen, beispielsweise Methyl, Butyl, Octyl, Nonyl, Decyl, Dodecyl oder Tetradecyl;
unsubstituierte oder mit 1 bis 3 C₁-C₁₈-Alkylresten substituierte heterocyclische Reste oder mit 1 bis 3 heterocyclischen Resten substituierte Alkylreste, beispielsweise der 2-[2-(8-Heptadecen-1-yl)-4,5-dihydro-1-imidazolyl]-ethyl-Rest. Mit heterocyclischen Resten sind sowohl cycloaliphatische als auch aromatische Reste gemeint.

Von besonderem Interesse sind auch Gemische der vorstehend genannten Verbindungen und insbesondere Gemische, wie sie bei der Oxalkylierung mit Ethylenoxid und/oder Propylenoxid von synthetischen Fettalkoholen aus der Oxosynthese oder von Fettalkoholen aus natürlichen Rohstoffen nach Fettspaltung und Reduktion gewonnen werden. Als natürliche Rohstoffe kommen Kokosöl, Palmöl, Baumwollsaatöl, Sonnenblumenöl, Sojabohnenöl, Leinöl, Rüböl, Talg und Fischöl in Betracht.

Von besonderem Interesse sind ferner oxalkylierte, höhermolekulare oberflächenaktive Mittel, beispielsweise die in DE-A-2 730 223 beschriebenen Kondensationsprodukte aus Phenolen, Alkanolen, Alkylenoxid und Carbonsäuren, die in DE-A1-3 026 127 (US-PS 4 960 935) beschriebenen Bisphenolderivate, die in DE-A1-24 21 606 (US-PS 3 998 652) beschriebenen Kondensationsprodukte aus Phenolen, Formaldehyd, Aminen und Alkylenoxid sowie die in EP-A1-17 189 (CA-A-1 158 384) beschriebenen wasserlöslichen Oxalkylierungsprodukte, wobei diejenigen oberflächenaktiven Mittel ausgenommen sind, die keinen Trübungspunkt in wäßriger Lösung haben.

Das erfindungsgemäß eingesetzte nichtionische Tensid oder Tensidgemisch kann an unterschiedlichen Stellen des Herstellungsverfahrens der genannten Pigmente zugesetzt werden. Beispielsweise kann der Zusatz vor der Azokupplung zur Diazoniumsalzlösung oder zur Lösung oder Suspension der Kupplungskomponente erfolgen. Der Zusatz kann auch zu verschiedenen Zeitpunkten vorgenommen werden. Bevorzugt ist der Zusatz vor einem eventuellen Aufheizen der Pigmentsuspension. Der Zusatz des nichtionischen Tensids muß jedoch spätestens vor der Isolierung des Disazopigments erfolgen.

Die Kupplungsreaktion zur Herstellung der besagten Azopigmente wird nach einer der üblichen Methoden im wäßrigen Medium durchgeführt, indem man
a) eine Lösung des Diazoniumsalzes zu einer Suspension oder Dispersion der Kupplungskomponente zugibt, oder
b) eine Lösung des Diazoniumsalzes und eine Lösung, Suspension oder Dispersion der Kupplungskomponente zu einer Pufferlösung oder in eine Mischdüse gleichzeitig zudosiert, oder
c) eine Lösung der Kupplungskomponente zu einer Lösung des Diazoniumsalzes zugibt, oder
d) eine Suspension oder Dispersion der Kupplungskomponente zu einer Lösung des Diazoniumsalzes zugibt.

Die Verfahrensparameter Zeit, Temperatur und pH-Wert unterscheiden sich nur wenig von denen in herkömmlichen Kupplungsverfahren und sind somit dem Fachmann bekannt. Vorteilhaft sind in den meisten Fällen die Kupplungsmethoden a) und d).
Weiterhin kann es vorteilhaft sein, die Kupplung in Gegenwart gebräuchlicher, die Kupplung fördernder Mittel durchzuführen, wie beispielsweise langkettige Aminoxide und Phosphinoxide.

Häufig ist es zweckmäßig, die nach der Kupplungsreaktion erhaltenen Pigmente in der Reaktionsmischung, gegebenenfalls unter erhöhtem Druck, für einige Zeit zu erhitzen.

Weiterhin lassen sich die genannten Mono- und Disazopigmente, die eine oder mehrere verlackbare saure Gruppen wie Sulfo- oder Carboxygruppen enthalten, nach üblichen Verfahren in Farblacke überführen.

Die Isolierung des Pigmentes aus dem wäßrigen Reaktionsgemisch und das Waschen mit Wasser erfolgt bei einer Temperatur oberhalb des Trübungspunkts des verwendeten Tensids. Dadurch können lösliche Nebenprodukte, wie Salze, ausgewaschen werden, ohne den Tensidgehalt des Produktes wesentlich zu beeinflussen.

Die Bindemittelbasis der mit den besagten Pigmentpräparationen hergestellten Druckfarben ist vorwiegend Nitrocellulose (NC), aber auch Kombinationen mit geringen Anteilen von NC-verträglichen Kunstharzen wie Maleinatharze, Acrylatharze, Kolophoniumharze, Polyamidharze und Polyurethanharze werden in der Praxis eingesetzt.

In den folgenden Beispielen beziehen sich "Teile" auf das Gewicht, "Volumenteile" verhalten sich zu Gewichtsteilen wie Liter zu Kilogramm.

### Beispiele

1) 110 Teile 1-Acetoacetylamino-2,4-dimethylbenzol werden in 3000 Teilen Wasser und 74 Teilen Natriumhydroxydlösung mit einem spezifischen Gewicht von 1,31 gelöst. Nach Zusatz von 2 Mol Natriumacetat und 400 Teilen Eis wird langsam 1,5 Mol 2-normaler Salzsäure zugesetzt.
   Zu der so hergestellten Kupplungskomponente wird eine Tetrazo-Lösung, hergestellt in üblicher Weise aus 63 Teilen 3,3'-Dichlor-4,4'-diaminodiphenyl bei 15°C, während 1,5 Stunden zugesetzt. Nach beendeter Kupplung neutralisiert man mit verdünnter Natronlauge und gibt bei 70°C 46 Teile disproportioniertes Kolophonium als Lösung in Natronlauge zu und erwärmt unter direkter Dampfeinleitung auf 98°C. Nach 1 Stunde Rühren wird auf 70°C abgekühlt und mit 31 %iger Salzsäure auf pH 4 gestellt.
   Dann werden 20 Teile eines C₁₂-C₁₅-Fettalkohol-ethylenoxid-propylenoxid-adduktes, mit einem Trübungspunkt in Wasser bei 40-42°C, in Form einer 10 %igen wäßrigen Lösung zugesetzt und 30 Minuten gerührt. Das Produkt wird bei 70°C filtriert, mit mindestens 50°C heißem Wasser salzfrei gewaschen und anschließend bei 60-65°C getrocknet. Man erhält 236 Teile Pigment Yellow 13 (C.I. No. 21 100) in Form eine Grobgranulates, das über eine Stiftmühle zu einem Pigmentpulver mit einem Siebrückstand (Naßsiebung über ein 63 »m-Sieb) von < 1 % gemahlen wird.
   Setzt man die vorgehend hergestellte Pigmentpräparation zur Herstellung einer lösungsmittelhaltigen Nitrocellulose-Tiefdruckfarbe ein und beurteilt die damit hergestellten Drucke mit einer Druckfarbe auf der Basis einer entsprechenden Pigmentpräparation ohne die erfindungsgemäße Tensidbehandlung, so zeigt die erfindungsgemäße Pigmentpräparation bei höherer Farbstärke eine deutlich höhere Transparenz und deutlich höheren Glanz.
2) Durch Kupplung bei 20-25°C bei einem pH-Wert zwischen 4,0 und 4,2 wird eine wäßrige Pigmentdispersion von 480 Teilen C.I. Pigment Red 146 in einem Kuppelendvolumen von 13000 Teilen hergestellt. Man gibt 48 Teile eines C₁₂-C₁₅-Fettalkohol-ethylenoxid-propylenoxid-adduktes, mit einem Trübungspunkt in Wasser bei 40-42°C, in Form einer 10 %igen wäßrigen Lösung zu, rührt noch 30 Minuten und erhitzt dann mit Direktdampf auf 60°C, filtriert heiß ab und wäscht mit mindestens 50°C heißem Wasser salzfrei. Die Trocknung erfolgt bei 70°C. Man erhält 528 Teile einer Präparation von Pigment Red 146 in Form von Grobgranulat, die über eine Stiftmühle zu einem Pigmentpulver mit einem Siebrückstand (Naßsiebung über ein 63 »m-Sieb) von < 1 % gemahlen wird.

Setzt man die vorstehend hergestellte Pigmentpräparation zur Herstellung einer lösungsmittelhaltigen Nitrocellulose-Tiefdruckfarbe ein und beurteilt die damit hergestellten Drucke mit einer Druckfarbe auf der Basis einer entsprechenden Pigmentpräparation ohne die erfindungsgemäße Tensidbehandlung, so zeigen die erfindungsgemäßen Pigmentpräparationen bei höherer Farbstärke eine deutlich höhere Transparenz und deutlich höheren Glanz.

### Färbebeispiele:

Herstellung von Tiefdruckfarben im Paint Shaker und anschließender Applikation auf einen Druckträger.
1. Firnis
   30,0 % Collodiumwolle A 400 (65% Ethanol feucht)
   4,0 % Weichmacher, beispielsweise ®Genomoll 140 (Dibutylphthalat)
   8,0 % Methoxypropanol
   58,0 % Ethanol (wasserfrei)
   1̅0̅0̅,̅0̅ %̅ (Feststoffgehalt 23,5 %)
2. Lösemittelgemisch:
   50 % Ethanol
   50 % Ethylacetat
   Von Probe und Vergleich werden je 2 Farben nach folgendem Verfahren hergestellt:
   In einem 150 ml Plastikbecher mit Steckdeckel werden 113 g Glaskugeln (2 mm Durchmesser) eingefüllt und
   5,4 g Pigment
   15,0 g Nitrocellulose (NC)-Firnis (1.)
   15,6 g Lösemittelgemisch (2.)
   3̅6̅,̅0̅ g̅ eingewogen (15 %iger Mahlgutansatz).
   Jeweils 2 Becher mit Probe und Vergleich werden gleichzeitig mit der Schüttelmaschine 30 Minuten lang dispergiert.
3. Anschließend werden in je einen Becher von Probe und Vergleich
   9,0 g NC-Firnis (1.) zugegeben
   und nochmals 2 Minuten mit der Schüttelmaschine geschüttelt. Diese jetzt 12 %igen Konzentrate werden über ein Sieb in eine Glasflasche abgefüllt und zur Messung der Viskosität verwendet.
4. In die beiden weiteren Becher von Probe und Vergleich werden je
   32,0 g NC-Firnis (1.) und
   4,0 g Methoxypropanol zugegeben
   und nochmals 2 Minuten geschüttelt. Diese jetzt 7,5 %igen fertigen Druckfarben werden von den Glaskugeln abgetrennt und in eine Glasflasche gefüllt. Vor dem Verdrucken bleibt die Farbe 10 Minuten zum Entweichen der Luftblasen stehen.
5. Druck
   Die oben beschriebenen 7,5 %igen Druckfarben werden mit einer Tiefdruck-probedruckmaschine je einmal auf Papier und Polypropylen (PP)-Folie gedruckt, und zwar Probe und Vergleich nebeneinander auf dem gleichen Druckträger.
   Jeder Druck wird sofort nach dem Drucken einige Sekunden lang auf eine Heizplatte mit einer Temperatur von 60°C gelegt, um ein Weißanlaufen des Druckes zu verhindern.
6. Viskositätsmessung
   Die Messung der Viskosität wird an den oben beschriebenen 12 %igen Konzentraten durchgeführt ( z.B. mit dem Rotovisko RV3 oder RV1 2 oder Viskotester VT 500, Fa. Haake, Karlsruhe).
7. Beurteilung
   Anhand des Andruckes auf Papier werden Farbstärke, Farbton und Reinheit sowie am Druck über Schwarz die Transparenz bewertet.
   Am Druck auf PP-Folie (unterlegt mit Papier) oder Alu-Folie wird der Glanz und die Transparenz bewertet.
   Weicht die Farbstärke der beiden Farben um mehr als 5% voneinander ab, so wird die kräftigere Farbe (Probe oder Typ) entsprechend mit Firnis (1.) abgeschwächt (z.B. auf 95 Teile, 90 Teile usw.) und erneut gegen die 2. Farbe angedruckt.

Die Pigmente aus den Beispielen und Vergleichsbeispielen werden auf die oben beschriebene Arbeitsweise zu Druckfarben verarbeitet, und mit diesen Druckfarben werden Drucke erzeugt.

## Patentansprüche

1. Verwendung von Mono- oder Disazopigmenten oder einer Präparation der genannten Pigmente aus der Gruppe der Acetessigarylid-Pigmente, Pyrazolon-Pigmente, β-Naphthol-Pigmente, 2-Hydroxy-3-naphthoesäureanilid-Pigmente, 2-Hydroxynaphthoesäure-Pigmente, Benzimidazolon-Pigmente, Diarylgelb-Pigmente, Diarylpyrazolon-Pigmente und Disazobenzimidazolon-Pigmente, mit Ausnahme der Pigmente, die Bis(acetoacetylamino)benzol oder dessen Derivate als Kupplungskomponente haben, wobei die Pigmente oder Pigmentpräparationen hergestellt worden sind, indem man spätestens unmittelbar vor der Isolierung des Mono- oder Disazopigments mindestens ein nichtionisches Tensid, das in wäßriger Lösung einen Trübungspunkt hat, zusetzt,
zum Pigmentieren von lösungsmittelhaltigen Verpackungstief- und Flexodruckfarben wobei wässrige Systeme ausgenommen sind.

2. Verwendung nach Anspruch 1, dadurch gekennzeichnet, daß der Zusatz des oder der nichtionischen Tenside vor der Azokupplung erfolgt.

3. Verwendung nach Anspruch 1, dadurch gekennzeichnet, daß der Zusatz des oder der nichtionischen Tenside vor einem Aufheizen der Pigmentsuspension erfolgt.

4. Verwendung nach mindestens einem der Ansprüche 1 bis 3, dadurch gekennzeichnet, daß der Trübungspunkt des oder der nichtionischen Tenside in Wasser zwischen 5 und 90°C, vorzugsweise zwischen 20 und 70°C, liegt.

5. Verwendung nach mindestens einem der Ansprüche 1 bis 4, dadurch gekennzeichnet, daß das oder die nichtionischen Tenside in einer Menge von 1 bis 20, vorzugsweise 3 bis 15, Gewichtsteilen, bezogen auf 100 Gewichtsteile Pigment oder Pigmentpräparation, zugesetzt werden.

6. Verwendung nach mindestens einem der Ansprüche 1 bis 5, dadurch gekennzeichnet, daß man als nichtionisches Tensid mindestens eine Verbindung aus der Gruppe der Oxalkylate von Alkoholen, Fettalkoholen, Phenolen, Alkylphenolen, Naphtholen oder Alkylnaphtholen, vorzugsweise die Ethylenoxid- oder Propylenoxid-Addukte mit den genannten Alkoholen, sowie Blockpolymere von Ethylenoxid, Propylenoxid oder eine Mischung davon einsetzt.

7. Verwendung nach mindestens einem der Ansprüche 1 bis 6, dadurch gekennzeichnet, daß das nichtionische Tensid ein Gemisch ist, welches bei der Oxalkylierung von synthetischen Fettalkoholen aus der Oxosynthese oder bei der Oxalkylierung von natürlichen Fettalkoholen, vorzugsweise solchen, die nach Fettspaltung und Reduktion von Kokosöl, Palmöl, Bauwollsaatöl, Sonnenblumenöl, Sojabohnenöl, Leinöl, Rüböl, Talg oder Fischöl erhältlich sind, mit Ethylenoxid, Propylenoxid oder einem Gemisch davon entsteht.

8. Verwendung nach mindestens einem der Ansprüche 1 bis 7, dadurch gekennzeichnet, daß das Azopigment die Kupplungskomponente β-Naphthol, 1-Acetoacetylamino-2-methyl-benzol, 1-Acetoacetylamino-2-chlorbenzol, 5-Acetoacetylamino-benzimidazolon, 5-(2'-Hydroxy-3'-naphthoyl)-aminobenzimidazolon, 1-(2'-Hydroxy-3'-naphthoylamino)-2-methoxy-benzol, 1-(2'-Hydroxy-3'-naphthoylamino)-2-ethoxy-benzol, 1-Acetoacetylamino-2-methoxy-benzol, Acetoacetylamino-benzol, 1-Acetoacetylamino-2,4-dimethylbenzol, 1-Acetoacetylamino-2,5-dimethoxy-4-chlor-benzol, 1-Acetoacetylamino-2,4-dimethoxy-5-chlor-benzol, 1-(4'-Methyl)-phenyl-3-methylpyrazolon oder 1-Phenyl-3-methyl-pyrazolon-5 enthält.

9. Verwendung nach mindestens einem der Ansprüche 1 bis 8, dadurch gekennzeichnet, daß die Bindemittelbasis der Verpackungstief- und Flexodruckfarben Nitrocellulose oder eine Kombination von Nitrocellulose mit geringen Anteilen von Nitrocellulose-verträglichen Kunstharzen ist.

10. Verwendung nach Anspruch 9, dadurch gekennzeichnet, daß die Nitrocellulose-verträglichen Kunstharze Maleinatharze, Acrylatharze, Kolophoniumharze, Polyamidharze oder Polyurethanharze sind.

## Claims

1. The use of mono- or disazo pigments or a preparation of the said pigments from the group of the acetoacetarylide pigments, pyrazolone pigments, β-naphthol pigments, 2-hydroxy-3-naphthanilide pigments, 2-hydroxynaphthoic acid pigments, benzimidazolone pigments, diaryl yellow pigments, diarylpyrazolone pigments and disazobenzimidazolone pigments, subject to the proviso that pigments which have bis(acetoacetylamino)benzene or derivatives thereof as coupling component shall be excluded, the pigments or pigment preparations having been prepared by adding at least one nonionic surfactant which has a cloud point in aqueous solution at the latest immediately prior to the isolation of the mono- or disazo pigment, for pigmenting solvent-containing packaging intaglio and flexographic printing inks, aqueous systems being excluded.

2. A use as claimed in claim 1 wherefor the addition of the nonionic surfactant(s) takes place prior to azo coupling.

3. A use as claimed in claim 1 wherefor the addition of the nonionic surfactant(s) takes place prior to a heating-up of the pigment suspension.

4. A use as claimed in at least one of claims 1 to 3 wherefor the cloud point of the nonionic surfactant(s) in water is between 5 and 90°C, preferably between 20 and 70°C.

5. A use as claimed in at least one of claims 1 to 4 wherefor the nonionic surfactant(s) is or are added in an amount of from 1 to 20, preferably 3 to 15, parts by weight, based on 100 parts by weight of pigment or pigment preparation.

6. A use as claimed in at least one of claims 1 to 5 wherefor the nonionic surfactant used is at least one compound from the group of the alkoxylates of alcohols, fatty alcohols, phenols, alkylphenols, naphthols or alkylnaphthols, preferably the ethylene oxide or propylene oxide adducts with said alcohols, and also block polymers of ethylene oxide, propylene oxide or a mixture thereof.

7. A use as claimed in at least one of claims 1 to 6 wherefor the nonionic surfactant is a mixture produced in the course of the alkoxylation of synthetic fatty alcohols from the oxo process or the alkoxylation of natural fatty alcohols, preferably those obtainable by fat cleavage and reduction of coconut oil, palm oil, cottonseed oil, sunflower oil, soybean oil, linseed oil, rapeseed oil, tallow or fish oil, with ethylene oxide, propylene oxide or a mixture thereof.

8. A use as claimed in at least one of claims 1 to 7 wherefor the coupling component is β-naphthol, 1-acetoacetylamino-2-methylbenzene, 1-acetoacetylamino-2-chlorobenzene, 5-acetoacetylaminobenzimidazolone, 5-(2'-hydroxy-3'-naphthoyl)aminobenzimidazolone, 1-(2'-hydroxy-3'-naphthoylamino)-2-methoxybenzene, 1-(2'-hydroxy-3'-naphthoylamino)-2-ethoxybenzene, 1-acetoacetylamino-2-methoxybenzene, acetoacetylaminobenzene, 1-acetoacetylamino-2,4-dimethylbenzene, 1-acetoacetylamino-2,5-dimethoxy-4-chlorobenzene, 1-acetoacetylamino-2,4-dimethoxy-5-chlorobenzene, 1-(4'-methyl)phenyl-3-methylpyrazolone or 1-phenyl-3-methyl-5-pyrazolone.

9. A use as claimed in at least one of claims 1 to 8 wherefor the binder base of the packaging intaglio and flexographic printing inks is nitrocellulose or a combination of nitrocellulose with small proportions of nitrocellulose-compatible synthetic resins.

10. A use as claimed in claim 9 wherefor the nitrocellulose-compatible synthetic resins are maleate resins, acrylate resins, rosins, polyamide resins or polyurethane resins.

## Revendications

1. Utilisation de pigments mono- ou disazoïques ou d'une préparation des pigments mentionnés appartenant au groupe des pigments de type acétoacétate d'aryle, pyrazolone, β-naphtol, anilide de l'acide 2-hydroxy-3-naphthoïque, acide 2-hydroxynaphthoïque, benzimidazolone, jaune de diaryle, diarylpyrazolone et disazobenzimidazolone, à l'exception des pigments qui ont comme composants de copulation le bis-(acétoacétylamino)benzène ou ces dérivés, les pigments ou les préparations de pigments étant préparés en ajoutant, au plus tard immédiatement avant l'isolement du pigment mono- ou disazoïque, au moins un agent de surface non-ionique et ayant un point de trouble en solution aqueuse, afin de pigmenter des encres d'impression flexographique et des encres d'impression héliographique pour emballage contenant elles mêmes des solvants, les systèmes aqueux étant exclus.

2. Utilisation selon la revendication 1, caractérisée en ce que l'addition du ou des agents de surface non-ioniques a lieu avant la copulation azoïque.

3. Utilisation selon la revendication 1, caractérisée en ce que l'addition du ou des agents de surface non-ioniques a lieu avant chauffage de la suspension de pigments.

4. Utilisation selon au moins l'une des revendications 1 à 3, caractérisée en ce que le point de trouble dans l'eau du ou des agents de surface non-ioniques se situe entre 5 et 90°C, de préférence entre 20 et 70°C.

5. Utilisation selon au moins l'une des revendications 1 à 4, caractérisée en ce que le ou les agents de surface non-ioniques sont additionnés dans une quantité allant de 1 à 20 parties en poids de pigments ou de préparation pigmentaire, rapportés à 100 parties en poids, de préférence allant de 3 à 15.

6. Utilisation selon au moins l'une des revendications 1 à 5, caractérisée en ce qu'on utilise, comme agent de surface non-ionique, au moins un composé appartenant au groupe des oxalkylates d'alcools, d'alcools gras, de phénols, d'alkylphénols, de naphtols ou d'alkylnaphtols, de préférence les adduits d'oxyde d'éthylène ou d'oxyde de propylène avec les alcools mentionnés, ainsi que les polymères séquencés d'oxyde d'éthylène, d'oxyde de propylène ou un de leurs mélanges.

7. Utilisation selon au moins l'une des revendications 1 à 6, caractérisée en ce que l'agent de surface non-ionique est un mélange, lequel se forme lors de l'oxalkylation d'alcools gras synthétiques à partir de l'oxosynthèse ou lors de l'oxalkylation d'alcools gras naturels, de préférence ceux qui sont obtenus après dédoublement des graisses et réduction de l'huile de coco, de l'huile de palme, de l'huile de coton, de l'huile de tournesol, de l'huile de soja, de l'huile de lin, de l'huile de colza, du suif ou de l'huile de poisson, avec de l'oxyde d'éthylène, de l'oxyde de propylène ou l'un de leurs mélanges.

8. Utilisation selon au moins l'une des revendications 1 à 7, caractérisée en ce que le pigment azoïque contient les composants de copulation suivants : le β-naphtol, le 1-acétoacétylamino-2-méthyl-benzène, le 1-acétoacétylamino-2-chlorobenzène, la 5-acétoacétylaminobenzimidazolone, la 5-(2'-hydroxy-3'-naphtoyl)aminobenzimidazolone, le 1-(2'-hydroxy-3'-naphtoylamino)-2-méthoxy-benzène, le 1-(2'-hydroxy-3'-naphtoylamino)-2-éthoxy-benzène, le 1-acétoacétylamino-2-méthoxy-benzène, l'acétoacétylamino-benzène, le 1-acétoacétylamino-2,4-diméthylbenzène, le 1-acétoacétylamino-2,5-diméthoxy-4-chloro-benzène, le 1-acétoacétylamino-2,4-diméthoxy-5-chloro-benzène, la 1-(4'-méthyl)-phényl-3-méthylpyrazolone ou la 1-phényl-3-méthyl-pyrazolone-5.

9. Utilisation selon au moins l'une des revendications 1 à 8, caractérisée en ce que la base de l'agent liant des encres d'impression flexographique et des encres d'impression héliographique pour emballage est de la nitrocellulose ou une combinaison de nitrocellulose avec de faibles quantités de résines synthétiques compatibles avec la nitrocellulose.

10. Utilisation selon la revendication 9, caractérisée en ce que les résines synthétiques compatibles avec la nitrocellulose sont des résines de maléïnate, de résines d'acrylate, des résines de colophium, des résines de polyamide ou des résines de polyuréthane.
